(19) Europäisches Patentamt
European Patent Office
Office européen des brevets

(11) **EP 3 316 628 B1**

(12) **EUROPEAN PATENT SPECIFICATION**

(45) Date of publication and mention
of the grant of the patent:
**02.09.2020 Bulletin 2020/36**

(51) Int Cl.:
***H04W 48/20*** *(2009.01)*

(21) Application number: **17198167.3**

(22) Date of filing: **24.10.2017**

(54) **WIRELESS ACCESS POINT SELECTION BASED ON SIGNAL-TO-INTERFERENCE-PLUS NOISE RATIO VALUE**

DRAHTLOSZUGANGSPUNKTAUSWAHL AUF BASIS VON SIGNAL-ZU-INTERFERENZ-PLUS-STÖRGERÄUSCH-WERT

SÉLECTION DE POINT D'ACCÈS SANS FIL SUR LA BASE DE LA VALEUR DU RAPPORT DE PUISSANCE SIGNAL SUR INTERFÉRENCE PLUS BRUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2016 US 201615336731**

(43) Date of publication of application:
**02.05.2018 Bulletin 2018/18**

(73) Proprietor: **Hewlett Packard Enterprise Development LP**
**Houston, TX 77070 (US)**

(72) Inventors:
• **PEFKIANAKIS, Ioannis**
**Palo Alto, CA California 94304-1112 (US)**
• **ZENG, Yunze**
**Palo Alto, CA California 94304-1100 (US)**

(74) Representative: **Haseltine Lake Kempner LLP**
**Redcliff Quay**
**120 Redcliff Street**
**Bristol BS1 6HU (GB)**

(56) References cited:
**US-A1- 2010 111 020    US-A1- 2013 279 362**
**US-A1- 2015 223 160**

• **SANJIB SUR ET AL: "Practical MU-MIMO user selection on 802.11ac commodity networks", MOBILE COMPUTING AND NETWORKING, ACM, 2 PENN PLAZA, SUITE 701 NEW YORK NY 10121-0701 USA, 3 October 2016 (2016-10-03), pages 122-134, XP058279589, DOI: 10.1145/2973750.2973758 ISBN: 978-1-4503-4226-1**
• **Yunze Zeng ET AL: "MAPS: MU-MIMO-Aware AP Selection for 802.11ac Networks", , 18 January 2017 (2017-01-18), XP055433272, Retrieved from the Internet: URL:http://spirit.cs.ucdavis.edu/pubs/tr/M APS-TR.pdf [retrieved on 2017-12-08]**

**Description**

BACKGROUND

Wireless networking can allow wireless devices, such as certain smartphones, laptops, tablets, or other suitable computing devices, to exchange data with other wired or wireless devices. In some wireless networks, a wireless device can access a wired portion of the network via one or more access points. Such access points can be designed to communicate with wireless devices to provide data connectivity to a local area network, wide area network, or other suitable network.

Sanjib Sur et al: "Practical MU-MIMO user selection on 802.11ac commodity networks" (ISBN: 978-1-4503-4226) describes a lightweight user grouping algorithm for MU-MIMO networks.

US 2015/223160 A1 describes directing network association of a wireless client.

US 2013/0279362 A1 describes a method for selecting a node in a serving cell in a distributed multi-node system.

US 2010/0111020 A1 describes a method for selecting a channel for an access point in a Wireless Local Area Network.

BRIEF DESCRIPTION OF DRAWINGS

FIG. 1 is a diagram of a network environment including a wireless controller with a signal-to-interference-plus noise ratio (SINR) estimation module, according to an example.

FIG. 2 is a diagram of another network environment, according to an example.

FIG. 3 is a flowchart for a method, according to an example.

FIG. 4 is a diagram depicting various aspects and interrelations of a wireless controller, access point, and client, according to an example.

FIG. 5 is a flowchart for a method, according to another example.

FIG. 6 is a diagram of a computing device in the form of a wireless controller, according to an example.

FIG. 7 is a diagram of machine-readable storage medium, according to an example.

SUMMARY OF THE INVENTION

The invention is defined by the appended independent claims. Further embodiments are defined in the dependent claims.

DETAILED DESCRIPTION

The following discussion is directed to various examples of the disclosure. Although one or more of these examples may be preferred, the examples disclosed herein should not be interpreted, or otherwise used, as limiting the scope of the disclosure, including the claims. In addition, the following description has broad application, and the discussion of any example is meant only to be descriptive of that example, and not intended to intimate that the scope of the disclosure, including the claims, is limited to that example. Throughout the present disclosure, the terms "a" and "an" are intended to denote at least one of a particular element. In addition, as used herein, the term "includes" means includes but not limited to, the term "including" means including but not limited to. The term "based on" means based at least in part on.

Certain existing AP selection algorithms seek to assign clients to APs in order to maximize a Received Signal Strength Indicator (RSSI) between the devices. In some situations, such an approach may perform poorly in enterprise and campus Wi-Fi networks. For example, an RSSI-based algorithm may yield from 50 to 230 Mbps lower throughput than certain implementations described herein. It appears that a root cause for this difference in performance is that an RSSI-based design may assign clients with correlated or non-orthogonal channels to the same AP, which may result in Multi-User Multiple Input Multiple Output (MU-MIMO) groups with high inter-client interference. In addition, even if clients for an AP have orthogonal channels, legacy AP selection algorithms may still limit MU-MIMO gains. Specifically, due to heterogeneous radio capability and interferences from neighboring devices, it may be the case that certain clients are unable to support the same channel bandwidth. Clients with different bandwidths may be prevented from being grouped together, as a given AP may be configured to transmit on a single center frequency and bandwidth at a time. Legacy AP selection algorithms may therefore assign heterogeneous clients to the same AP, which may result in limited MU-MIMO grouping opportunities and lower throughput.

Certain implementations of the present disclosure are directed to wireless access point selection based on signal-to-interference-plus noise ratio (SINR) value. In some implementations, a method according to the present disclosure can include: (a) estimating a SINR value between a wireless client and each AP of a plurality of APs based on Channel State Information (CSI) between the wireless client and each AP of the plurality of APs and (b) selecting an AP of the plurality of APs to be associated with the wireless client based on a channel bandwidth of the wireless client and the estimated SINR value between the wireless client and each AP of the plurality of APs. Certain implementations of the present disclosure may allow for the identification of a best throughput client-to-AP assignment in networks that support MU-MIMO and channel bonding technology. Other advantages of implementations presented herein will be apparent upon review of the description and figures.

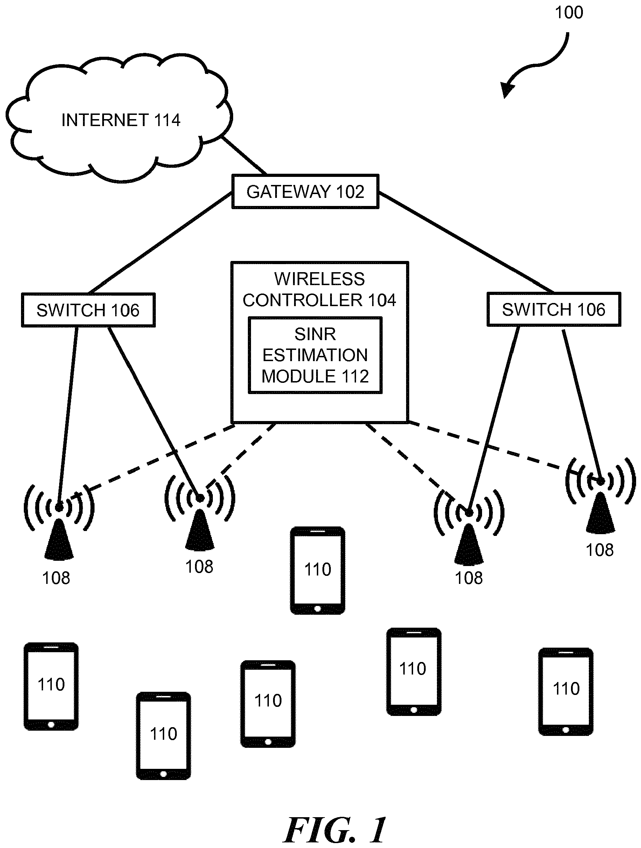

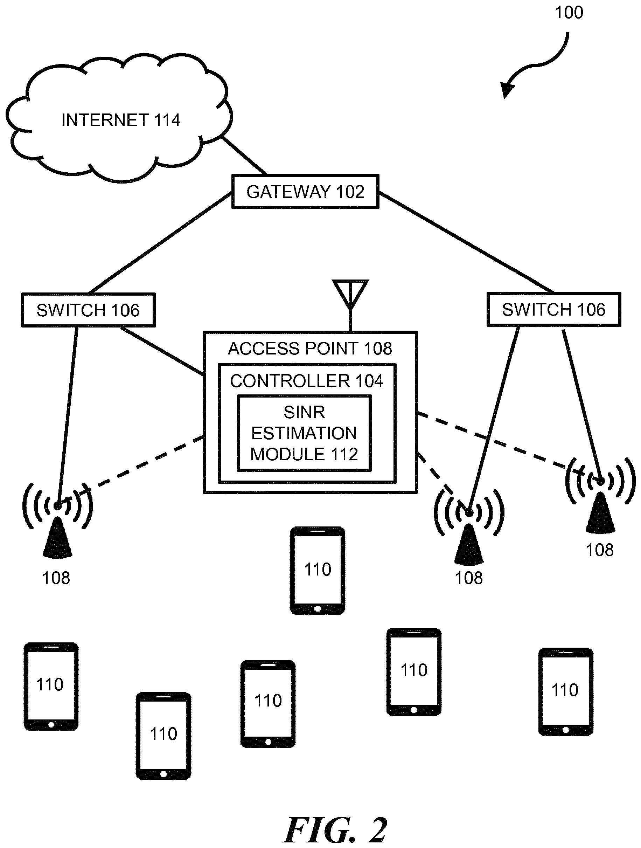

FIGs. 1 and 2 are diagrams of an example network environment 100 that includes a local area network portion including a gateway 102, a wireless controller 104, various switches 106, various APs 108, and various wireless clients 110. In environment 100 of FIG. 1, wireless controller 104 includes a SINR estimation module 112 as described in further detail below, whereas in environment 100 of FIG. 2, AP 108 includes a controller 104 having an SINR estimation module 112. The structure and functionality of the various aspects of environment 100 are described in further detail below.

The terms "access point" or "AP" as used herein, can, for example, refer to networking hardware device that allows a Wi-Fi compliant device to connect to a wired network. Such an AP 108 may be connected to an upstream wired device, such as switch 106, wireless controller 104, etc., via an Ethernet connection and may provide one or more downstream wireless connections using Radio Frequency (RF) links for other wireless clients to use a wired connection. AP 108 can support one or more industry standards for sending and receiving data using these radio frequencies, such as the Institute of Electrical and Electronics Engineers (IEEE) 802.11 standard or other suitable standards. AP 108 can, for example, be in the form of a standalone device connected to a gateway (e.g., gateway 102), router, or other intermediate datapath device. In some implementations, AP 108 may be an integral component of such an intermediate datapath device or other network equipment.

As used herein, the term "wireless controller" can, for example, refer to any suitable entity that handles control and management functions of a network or equipment thereof. For example, wireless controller 104 can be used to control one or more aspects of APs 108, such as channel assignment, beamforming, radio resource management (RRM), etc. In some implementations, applications can run on wireless controller 104 or on other devices on the network (or otherwise in communication with the network) to meet customer use cases, such as to achieve a desired throughput (or another Quality of Service (QoS)) over the network, enforce security provisions or access control policies for the network, or provide another suitable service or functionality.

In some implementations, wireless controller 104 can allow for the decoupling of traffic routing control decisions (e.g., which port of a given switch should be used to forward traffic to a given destination) from the network's physical infrastructure. For example, in some implementations, wireless controller 104 can be in the form of an SDN controller and switches 106 can be in the form of SDN-enabled switches that are within the control domain of the SDN controller. In some environments, one or more network nodes within environment 100 may be deemed to be "controlled" by another device, such as wireless controller 104. As used herein, the term "controlled" can, for example, refer to devices within the control domain of the wireless controller 104 or otherwise controllable by wireless controller 104. Such a controlled node can, for example, communicate with wireless controller 104 and can allow wireless controller 104 to manage the node in accordance with a protocol. For example, an OpenFlow-compatible switch controlled by a wireless controller 104 with SDN capabilities may permit controller 104 to add, update, and delete flow entries in flow tables of switch 106 using suitable commands.

In some network environments, a data packet may be routed from a given switch 106 to a given wireless client 110 through one or more data paths that may include wireless links (e.g., a wireless link between AP 108 and wireless client 110). For example, in some network environments, a data packet may be routed to wireless client 110 along a first datapath that uses a first AP 108 or alternatively along a second datapath that uses a second AP 108. A given data path for data packets within environment 100 can be determined by wireless controller 104 (or another entity, such as by a network administrator, by datapath nodes themselves, etc.) based on one or more static parameters (e.g., link speeds, number of hops between nodes, etc.) and can further (or alternatively) be based on one or more dynamic parameters (e.g., QoS, network latency, network throughput, network power consumption, etc.).

Network nodes within environment 100 can forward traffic along a datapath based on metadata within the traffic. For example, traffic in the form of a packet can be received at switch 106 (or another suitable intermediary network node). For consistency, the industry term "packet" is used throughout this description, however, it is appreciated that the term "packet" as used herein can refer to any suitable protocol data unit (PDU). Such a packet can, for example, include payload data as well as metadata in the form of control data. Control data can, for example, provide data to assist the network node with reliably delivering payload data. For example, control data can include network addresses for source and destination nodes (e.g., wireless client 110), error detection codes, sequencing information, packet size of the packet, a time-to-live (TTL) value, etc. In contrast, payload data can include data carried on behalf of an application for use by source and destination nodes.

The functionality of wireless controller 104 or other network equipment within environment 100 can, for example, be implemented in part via a software program on a standalone machine, such as a standalone server. In some implementations, wireless controller 104 can be implemented on one or more multi-purpose machines, such as a suitable desktop computer, laptop, tablet, or the like. In some implementations, wireless controller 104 can be implemented on a suitable non-host network node, such as certain types of network switches. In some implementations, the functionality of wireless controller 104 can be implemented within the hardware and software of an AP (e.g., AP 108). It is appreciated that the functionality of wireless controller 104 may be split among multiple controllers or other devices. For example, environment 100 is described and illustrated as including only one wireless controller 104. However, it is appreciated that the disclosure herein can be implemented in networks with multiple controllers. For example, in some networks, network devices are in communication with multiple controllers such that control of the network can be smoothly handed over from a first controller to a second controller if a first controller fails or is otherwise out of operation. In some implementations, or more wireless controllers 104 can operate in a distributed fashion over multiple appliances but present themselves as a single entity to the network.

**As** another example, multiple controllers 104 can be used to work together to concurrently control certain networks. In such networks, a first controller 104 can, for example, control certain network devices while a second controller 104 can control other network devices. In view of the above, reference in this application to a single wireless controller 104 that controls the operation of network devices in environment 100 is intended to also include such multiple controller configurations (and other suitable multiple controller configurations).

Wireless clients 110 can, for example, be in the form of network hosts or other types of network nodes or devices. Wireless clients 110 are depicted as mobile phones in FIGs. 1 and 2, however such clients can be in the form of any suitable device that can transmit and receive wireless data with an AP 108. For example, in some implementations, wireless clients 110 can be in the form of suitable mobile phones, tablets, laptops, servers, desktop computers, printers, APs, wireless sensors, beacons, Internet of Things (IoT) devices, etc. In certain implementations, one or more wireless clients 110 can be in the form of a desktop computer including a monitor for presenting information to an operator and a keyboard and mouse for receiving input from an operator and one or more wireless clients 110 can be in the form of smart phones. It is appreciated that wireless clients 110 can be endpoint nodes of environment 100 (such as depicted in FIGs. 1 and 2), intermediate nodes between endpoint nodes, or positioned at other logical or physical locations within environment 100.

Various intermediary nodes within the network environment can, for example, be in the form of switches (e.g., switches 106) or other multi-port network bridges that process and forward data at the data link layer. In some implementations, one or more of the nodes can be in the form of multilayer switches that operate at multiple layers of the Open Systems Connection (OSI) model (e.g., the data link and network layers). Although the term "switch" is used throughout this description, it is appreciated that this term can refer broadly to other suitable network data forwarding devices. For example, a general purpose computer can include suitable hardware and machine-readable instructions that allow the computer to function as a network switch. It is appreciated that the term "switch" can include other network datapath elements in the form of suitable routers, gateways and other devices that provide switch-like functionality for the network. Gateway 102 can, for example, be in the form of a network node that acts as an entrance to another network, such as Internet 114 or another suitable Wide Area Network (WAN) or Local Area Network (LAN).

The various nodes within network environment 100 are connected via one or more data channels (shown in solid lines), which can, for example be in the form of data cables or wireless data channels. Although a single link (i.e., a single line in FIGs. 1 and 2) between each network node is illustrated, it is appreciated that each single link may include multiple wires or other wired or wireless data channels. Moreover, FIGs. 1 and 2 further depict wireless controller 104 as being connected to APs 108 via broken lines, which is intended to illustrate logical control channels between wireless controller 104 and APs 108. However, it is appreciated that wireless controller 104 may be directly connected to only one or a few APs 108, while being indirectly connected to other nodes of the network. For example, wireless controller 104 can be directly connected to a first AP via an Ethernet cable, while being indirectly connected to a second AP (e.g., by relying on the first AP to wireless communicate to the second AP control signals for the second AP or via a wired connection between the first and second APs). In certain implementations, the functionality and/or equipment for wireless controller 104 can reside within Internet 114 or another network.

In the example environment 100 depicted in FIGs. 1 and 2, the various network nodes are in the form of intermediary nodes (e.g., switches 106, gateway 102, APs 108), a controller node (e.g., wireless controller 104), and host devices (wireless clients 110). It is appreciated however, that the implementations described herein can be used or adapted for networks including more or fewer devices, different types of devices, and different network arrangements.

As an example, in some implementations, wireless controller 104 may operate as an intermediary node or a host device. As another example, in some implementations, such as in certain mesh networks, a backhaul of the network may be wireless instead of wired. In such an implementation, an AP 108 may wirelessly relay data to another AP 108 that is connected to the wired backbone, to thereby use a wireless link between two APs as a wireless backhaul.

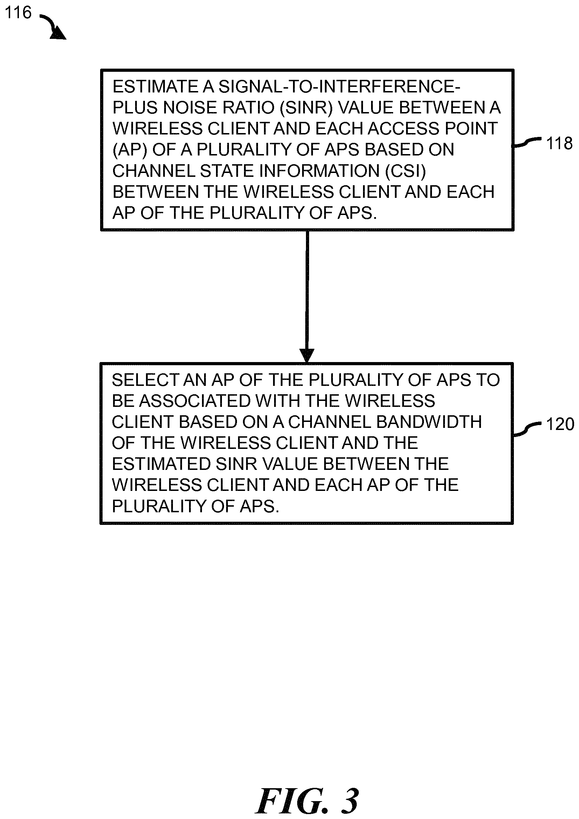

FIG. 3 illustrates a flowchart for an example method 116 related to wireless AP selection based on SINR value. For illustration, the description of method 116 and its component steps make reference to the example network environment 100 of FIGs. 1 and 2 and elements thereof, such as for example APs 108, wireless clients 110, etc. Moreover, network environment 100 of FIGs. 1 and 2 depict four APs 108. However, it is appreciated that method 116 or aspects thereof can be used or otherwise applicable for any suitable network or network element described herein or otherwise. For example, method 116 can be applied to an environment 100 with a different number of APs 108, wireless clients 110, controllers 104, etc.

In some implementations, AP 108 is compatible with MU-MIMO technology. Certain implementation of MU-MIMO can support multiple, concurrent data streams from an AP 108 to a group of wireless clients 110. In some implementations, MU-MIMO can provide for giga-speed throughput for Wi-Fi (e.g., 802.11ac/ax) and 5G wireless networks. The actual implementation of such speeds may, however, be limited based on various network parameters. For example, in some implementations, such MU-MIMO speeds can be achieved when the AP 108 is able to identify groups of wireless clients 110 with orthogonal channels, whose concurrent transmissions will not cause inter-client interference. Many existing AP selection algorithms assign clients with correlated channels or heterogeneous channel bandwidth configurations to the same AP, which may limit MU-MIMO grouping opportunities and MU-MIMO throughput gains. Certain implementations of the present disclosure can provide for a MU-MIMO-Aware AP Selection (MAPS) algorithm that can comply with IEEE 802.11ac and can boost a network's MU-MIMO throughput gains. References to "MAPS" herein may refer specifically to certain MU-MIMO-Aware AP selection algorithms or more generally to any suitable AP selection algorithm described herein, including those that may apply to suitable non-MU-MIMO equipment.

The design of a MAPS algorithm may pose significant technological challenges. In some implementations, a first technological challenge is to identify clients with orthogonal channels and assign them to the same AP. One approach may be to associate each client to all APs in its range and use sounding feedback to estimate channel correlation. However, such an approach may lead to undesired frequent handoffs, which may affect a wireless client's performance and may result in lengthy association with low-throughput APs. A second technological challenge for certain implementations is that AP selection may benefit from accounting for a wireless clients' bandwidth heterogeneity, which can limit MU-MIMO gains. Moreover, it is appreciated that AP selection may run in coarser time scales (so as to avoid frequent handoffs) compared to other MU-MIMO designs such as client grouping, that may rely on instantaneous wireless channel feedback. As a result, a MAPS algorithm may be able to capture long-term wireless channel characteristics. In some implementations, a MAPS algorithm may be designed to balance load among APs while boosting MU-MIMO gains, which may, in some cases, be conflicting objectives.

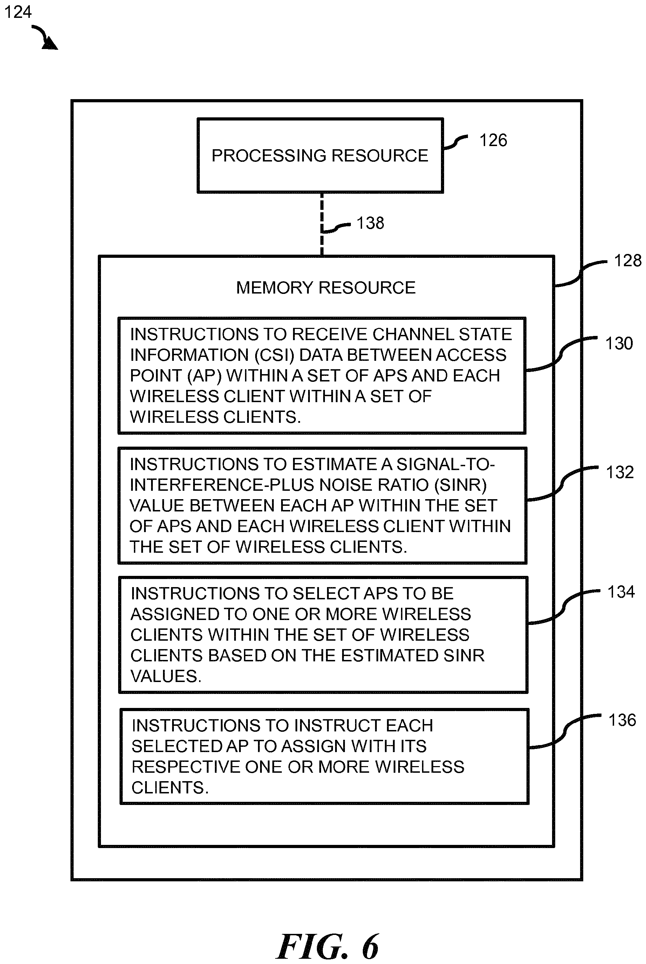

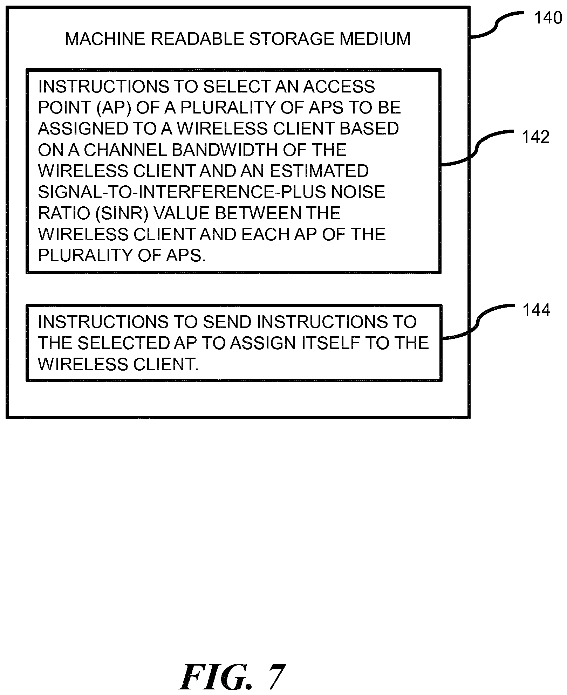

In some implementations, method 116 can be implemented or otherwise executed through the use of executable instructions stored on a memory resource (e.g., the memory resource of the computing device of FIG. 6), executable machine readable instructions stored on a storage medium (e.g., the medium of FIG. 7), in the form of electronic circuitry (e.g., on an Application-Specific Integrated Circuit (ASIC)), and/or another suitable form. Although the description of method 116 herein primarily refers to steps performed on controller 104 for purposes of illustration, it is appreciated that in some implementations, method 116 can be executed on another computing device within network environment 100 (e.g., AP 108) or in data communication with network environment 100. In some implementations, method 116 can be executed on network devices in parallel (e.g., in a distributed computing fashion), such as a distributed AP environment. As used herein, the term "distributed AP environment" can, for example, refer to an environment in which APs are able to provide control instructions to each other without the use of a dedicated standalone wireless controller. In such a scenario, method 116 can, for example, be implemented on one or more APs 108 within the environment.

Method 116 includes estimating (at block 118) a SINR value between wireless client 110 and each AP 108 of a plurality of APs based on CSI between wireless client 110 and each AP 108 of the plurality of APs. Various techniques for determining SINR based on CSI are provided below for example with respect to the detailed example implementation following description of method 116. In some implementations, CSI can be determined by an AP 108 or other network node in environment 100 via a "channel sounding" operation. As used herein, the term "channel sounding" can, for example, refer to a technique to evaluate a radio environment for wireless communication. In some implementations, such channel sounding may include transmitting a broadband multi-tone test signal. In such an operation, a continuous periodic test sequence that arrives at a receiver can be correlated with an original transmitted sequence. This correlation data or other suitable feedback data may then be analyzed to estimate dynamic channel characteristics. The estimated dynamic channel characteristics can, for example, broadly include characteristics relating to channel frequency, time, and position of devices within the channel. In some implementations, one or more dynamic channel characteristics can include characteristics relating to Direction of departure (DOD), Direction of arrival (DOA), Time delay, Doppler shift, and complex polarimetric path weight matrix.

In some implementations, CSI can be determined by an AP 108 by leveraging a NULL frame probing scheme to collect CSI feedback from wireless client 110, without actual association of wireless client 110 with an AP 108. For example, CSI samples measured at AP 108 can, in some implementations, capture multipath characteristics of environment 100, and can, in some situations, be used as a proxy for wireless client channel correlation. In some implementations, MAPS may first sanitize CSI samples by removing RF-hardware triggered amplitude deviations using local regression smoothing filters. MAPS may then construct a CSI profile that differentiates between persistent and transient multipath. Such a CSI profiler may apply a correlation metric among back-to-back CSIs, which captures dominant multipath changes, and at the same time can remain robust to RF hardware-triggered CSI phase shifts.

In some implementations, block 118 may leverage CSI to estimate the SINR value for a wireless client as a part of a MU-MIMO group. Such SINR approximation error may be small (<2 dB) compared to SINR estimation using explicit receiver channel feedback. In some implementations, the estimated SINR, as well as a wireless client's bandwidth and traffic profiles, to compute a new effective throughput metric, which may be used to assign clients to the best throughput APs. In some implementations, MAPS may use both timers and events to prevent unnecessary handoffs, and to remain adaptive to channel dynamics. In some implementations, MAPS may balance AP loads by preventing client assignments to overloaded APs.

Performance gains using MAPS may be tested with 802.11ac commodity APs and MU-MIMO-capable smartphones. Experimental results show that MAPS may outperforms RSSI-based AP selection designs in 90% of settings, with network throughput gains greater than 250 Mbps, even in small 3-AP topologies. In the majority (~80%) of experiments, performance using MAPS is the same as the optimal, best-throughput client assignment and has also been shown to improve throughput fairness among clients in some situations.

Method 116 includes selecting (at block 120) an AP of the plurality of APs to be associated with the wireless client based on a channel bandwidth of the wireless client and the estimated SINR value between the wireless client and each AP of the plurality of APs. In some implementations, channel correlation may be determined based on channel bandwidth. In some situations, highly-correlated channels may result in inter-client interference and consequently to high Packet-Error-Rate (PER). This may result in low throughput performance in a wireless network.

In some implementations, block 120 can include selecting an AP 108 to be associated with wireless client 110 based on which AP 108 can provide the highest throughput performance for wireless client 110. In some implementations, block 120 can include selecting an AP 108 to be associated with wireless client 110 based on a number of wireless clients 110 currently associated with each AP 108 of the plurality of APs. In some implementations, block 120 can include selecting an AP 108 to be associated with wireless client 110 based on predicted traffic load of wireless client 110. In some implementations, block 120 can include selecting an AP to be associated with wireless client 110 based on reducing a number of wireless clients 110 with correlated channel bandwidths associated with an AP 108 of the plurality of APs so as to reduce interference between wireless clients 110 associated with an AP 108. In some implementations, block 120 can include selecting an AP 108 to be associated with wireless client 110 based on reducing interference between wireless clients 110 associated with an AP 108.

In some implementations, block 120 can include selecting an AP 108 to be associated with wireless client 110 based on predicted Quality of Experience (QOE) for wireless client 110. As used herein, the term "Quality of Experience" can, for example, refer to a measure of a client's experiences with a service. Such a QoE can, for example, be based on the achievement of one or more quality-of-service ("QoS") metrics. Such, QoS metrics can, for example, refer to acceptable bandwidths, latencies, error rates, jitter rates, and the like. QoE and QoS can, for example, be implemented to help ensure a quality experience when using time-sensitive network services, such as real-time multimedia services including Internet Protocol television (IPTV), video calls, online gaming, security camera streams, Voice over IP (VoIP) traffic, or other services. In some implementations, the determination of better QoE is based on throughput between AP 108 and wireless client 110, signal strength between the AP and wireless client, polarity configuration of antennas of the wireless client, and/or other suitable metrics.

It is appreciated that a determination whether one AP provides a "better" QoE to a wireless client compared to another AP can be based on numerous factors. For example, a given AP can be determined to be "better" than another transmit configuration because it provides or is predicted to provide one or more of the following: greater throughput, lower latencies, error, or jitter rates, etc. It is further appreciated that a given AP can be determined to be "better" based on other factors, such as a preference of a network administrator.

It is appreciated that one or more operations of method 116 can be performed periodically. For example, in some implementations, one or more of blocks 118 and 120 (or other operations described herein) may be performed periodically. The various period times for blocks 118 and 120 (or other operations described herein) may be the same or different times. For example, in some implementations, the period of block 118 is every 1 second and the period of block 120 is every 5 seconds. It is further appreciated, that the period for a given block may be regular (e.g., every 1 minute) or may be irregular (e.g., every 1 minute during a first network condition, and every 2 minutes during a second network condition). In some implementations, one or more of block 118 and 120 (or other operations described herein) may be non-periodic and may be triggered by some network or other event. For example, in some implementations, block 120 of selecting an AP to be associated with wireless client 110 is triggered by the expiration of a timer. In some implementations, the timer is paused for idle or low traffic clients so as to avoid frequent handoffs. In some implementations, the timer is temporarily paused for delay-sensitive traffic.

Various example implementations for MAPS will now be described. It is appreciated that these examples may include or refer to certain aspects of other implementations described herein (and vice-versa), but are not intended to be limiting towards other implementations described herein. Moreover, it is appreciated that certain aspects of these implementations may be applied to other implementations described herein.

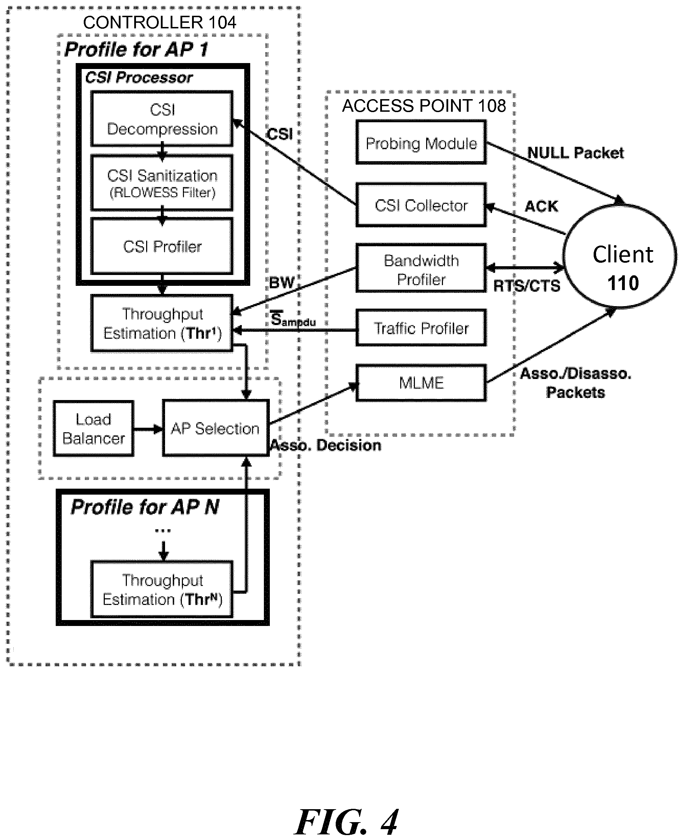

In some implementation, MAPS may be configured to boost Wi-Fi network's MU-MIMO throughput gains by assigning wireless clients 110 with uncorrelated wireless channels and similar bandwidth profiles to the same AP 108. An overview of an example MAPS architecture is provided in FIG. 4, aspects of which are described in detail herein. In some implementations, an AP 108 may collect CSI samples (in a compressed format) from wireless clients 110 in its vicinity, using NULL data probing. CSI, along with a wireless client's traffic and bandwidth profiles are sent to wireless controller 104. Wireless controller 104 first decompresses and sanitizes the CSI samples as described in detail below. After this, constructs the dominant multipath profile for each wireless client 110 and AP 108. CSI, bandwidth and traffic profiles may be used to estimate a throughput $Thr_x$ for each AP 108. When AP selection is triggered for a client k, controller 104 may identify as candidates APs 108 in the range of k that are not overloaded. It may select an AP 108 that maximizes effective network throughput, and may communicate its decision to the selected AP 108. The Medium Access Control (MAC) Sublayer Management Entity (MLME) can then associate the wireless client 110 to the selected AP 108.

In some implementations, MAPS may seek to identify wireless clients 110 with uncorrelated channels and map them to the same AP 108. One approach may be to periodically associate each wireless client 110 to all APs 108 in its range, and either collect coordinated beamforming (CBF) data to estimate the wireless clients' channel correlation, or measure the long-term MU-MIMO performance. However, such approach may rely on frequent handoffs which may degrade client performance, and lead to long association with low-throughput APs 108. As described in further detail below, MAPS may estimate MU-MIMO performance without a wireless client 110 actually being associated to an AP 108.

In some implementations, MAPS may adopt an implicit feedback approach, and measures the CSI at the AP side from received frames. Physical wireless channel (i.e., multipath characteristics) may be considered reciprocal and AP-side CSI can capture a correlation among clients' wireless channels. AP-side CSI can be measured without a client actually being associated to an AP. Specifically, an AP within a wireless client's range can use MAC-address spoofing to impersonate the AP that a client is already associated with. It may then send a NULL data frame to the wireless client and estimate the CSI from the ACK frames returned by the wireless client. Channel correlation (and hence interference) between clients i, j at subcarrier s, can be estimated by the V matrix correlation as:

$$\rho(i,j) = \frac{\sum_s \|V_i(s)V_j^H(s)\|}{\sqrt{\sum_s \|V_i(s)\|^2}\sqrt{\sum_s \|V_j(s)\|^2}}$$

In some implementations, MAPS may collect CSIs at the AP-side from the received frames. In implementations where wireless clients have only 1 antenna, a CSI sample may be a $N_t \times N_s$ matrix of complex numbers, where $N_t$ is the number of antennas at the AP, and $N_s$ is the number of subcarriers. Hence, a CSI sample estimated from an ACK frame (transmitted at 20 MHz) may be a $4 \times 57$ matrix (for a 4-antenna AP). It is appreciated that CSIs reported by commodity Wi-Fi devices can be very noisy. Such noise may be attributed to transmission power changes, rate adaptation, internal CSI reference level changes, among other factors. For example, such spikes may exceed 10 dB. In some implementations, MAPS may apply a robust LOWESS (Locally Weighted Scatterplot Smoothing) filter that performs local regression with weighted least squares to smoothen outliers. Non-parametric smoothers like LOWESS may be appropriate for CSIs as they do not assume that the data fits some distribution shape. The smooth CSIs may then be used to estimate an SINR value for a client k operating in an MU-MIMO group of K clients in Equation 1 as:

$$SINR = \frac{\overbrace{\frac{1}{K}\|D_k\|^2}^{signal\_power}}{\underbrace{N}_{noise\_floor} + \underbrace{\frac{1}{K}\|D_k\|^2 \sum_{j \neq k}\|V_k^H V_j\|^2}_{interference}}$$

The above equation may accurately estimate SINR in 802.11ac wireless devices. In some implementations, MAPS may first estimate V by applying singular value decomposition (SVD) on CSI. V correlation may capture inter-client interference by estimating the noise N using Error Vector Magnitude (EVM), which may be provided by the AP's firmware, for every received frame across all subcarriers. Finally, it may calibrate $D_k$ to account for the transmit power difference between the wireless client and AP. Specifically, it may multiple the factor $\|D_k\|^2$ with 10 x ($P_{AP}$ -$P_{client}$)/10, which is the transmit power difference (dBm) at AP and client sides. $P_{client}$ is available at the AP through 802.11 Event Report frames. The SINR metric may be estimated per OFDM subcarrier. In some implementations, MAPS may compute an effective SINR across all subcarriers using other suitable approaches, such as those that are robust in frequency-selective fading environment.

The accuracy of the above SINR metric may be evaluated by comparing it with a muSINR metric that uses explicit, receiver-side V and D feedback, communicated through CBF. According to experimental data, for 70% of cases the SINR estimation error may be less than 2 dB. This error will not lead to erroneous PHY rate estimation most of the times and will likely not affect MAPS ability to infer MU-MIMO throughput. Since MAPS' SINR estimation is not used for core functionalities such as MU-MIMO client selection and beamforming, estimation error outliers will not significantly impact MAPS' performance.

MAPS' operations may be triggered in coarser time scales (e.g., second scale) than other CSI-based algorithms, such as MU-MIMO client selection (e.g., millisecond scale) in order to avoid excessive handoffs. Hence, rather than maintaining the latest CSI sample, MAPS may construct a CSI profile that is able to differentiate between persistent and transient multipath characteristics of the environment.

Constructing such a CSI profile may be a technologically challenging process. First, storing and processing all the measured CSIs may be a big overhead even for a powerful Wi-Fi controller, as CSIs may be collected at microsecond granularity. Second, even if the multipath characteristics of the environment remain the same, the phase of back-to back CSI samples may vary. Such phase variations have been attributed to RF hardware characteristics. In some implementations, a CSI profiler should be robust to such variations and capture only significant multipath changes.

Experimental data shows that phase variations caused by 802.11ac RF hardware are not random. For example, an almost constant phase shift for all subcarriers and a small shift in phase curve across frequency domain may be observed for antennas. However, similar shapes of phase curves may also be observed. Because hardware-triggered phase shifts do not change the shape of the phase curves of back-to-back frames, it is expected that their correlation will be high. A correlation factor p for CSI samples may be computed by using CSI H instead of V in equation 1 above. Experimental data indicates that for 80% of the cases, p ≥ 0.85 (with p equaling 1 for same CSI samples).

While CSI correlation metric may be robust to hardware triggered phase shifts, it can also capture changes in multipath environment. In a stable multipath case, CSI signals may overlap in space, which may be reflected in their CSI correlation. In a dynamic multipath case, main lobes of the signals may not overlap, which indicates a lower correlation. As a result, CSI correlation p may be considered a robust metric for capturing dominant multipath.

MAPS leverages the CSI correlation metric to maintain L dominant multipaths (i.e., CSIs). For each new CSI *i*, MAPS may estimate its correlation ρ(*i, j*) with each CSI *j* of the CSI profile. If the maximum correlation with a CSI *j* is greater than a threshold (max j∈L {p(*i, j*)} > R), then MAPS may replace CSI *j*, with *i* and increase a counter csi$_j$ (with *j* being an index of the CSI profile). R can be set to 0.85 based on experimental data. Otherwise, the new CSI is stored in a new entry of the profile. If the CSI profile is full (e.g., with |L| CSIs), MAPS will either replace an existing CSI *j* entry with the new CSI, if csi$_j$ = 1, or it will discard i. MAPS periodically clears the CSI profile to allow for new dominant paths.

In some implementations, MAPS estimates a wireless client's SINR for all the MU-MIMO group assignments to select the best AP. However, a client's SINR will change for each CSI in its profile. Processing all the CSIs in a client's profile, for all the possible MU-MIMO groups, may result in significant processing overhead. MAPS amortizes such overhead, using the counter csi$_i$, which reflects the "dominance" of a multipath. It selects as client's dominant multipath, its CSI *i* with a probability

$$P_{csi_i} = \frac{csi_i}{\sum_{j=1}^{|L|} csi_j}$$

It then may use the selected CSI for throughput estimation, as discussed below. In some implementations, MAPS can leverage the effective SINR metric calculated by AP-side CSIs, to estimate client's MU-MIMO through put performance, when assigned at an AP. Hence, it can prevent clients with correlated channels from being assigned to the same AP. However, apart from channel correlation, MU-MIMO grouping opportunities can, for example, also depend on a) the number of associated clients to an AP, b) their bandwidth characteristics and c) their traffic dynamics. MAPS may profile a clients' bandwidth and traffic, using a metric to predict the best-throughput AP assignment.

In some implementations, MAPS profiles clients' bandwidth and traffic at runtime. First, it may maintain a number of frames (Aggregated MPDUs - AMPDUs) $bw_i$, transmitted at width $i$. The probability of a client transmitting at width i is:

$$P_{bw_i} = \frac{bw_i}{\sum_{j \in \{20,40,80,160\}} bw_j}$$

It may then periodically reset $bw_i$, to account for new interference dynamics. Experimental measurements in an enterprise Wi-Fi setting show that a client's width profile may typically be similar for all APs in its range in dense Wi-Fi deployments. As a result, MAPS may be programmed to maintain one bandwidth profile per-client, across APs.

In some implementations, MAPS captures traffic activity by maintaining a moving average of each client's A-MPDU size as:

$$\overline{S}_{ampdu} = (1 - \alpha) \cdot \overline{S}_{ampdu} + \alpha \cdot S_{ampdu}$$

where $\alpha$ = 1/8 in this implementation. The client's traffic profile may be periodically aged as $S_{ampdu} = (1-\alpha) \cdot \overline{S}_{ampdu}$ to consider a wireless client's idle times. Typically, a small $S_{ampdu}$ implies low traffic activity.

In some implementations, MAPS leverages the SINR metric and clients' profiles, to estimate the throughput of an MU-MIMO group. Specifically, it may use SINR to identify a client k's best throughput PHY rate $r_k$ (i.e., MCS, spatial streams), when it is part of an MU-MIMO group. A client's bandwidth data may be maintained in its profile. The throughput of a group m may be computed as follows:

$$Thr_m = \frac{S_d}{T_x + T_o}$$

The total amount of data ($S_d$) to be transmitted at a time slot from the clients in a group m, is:

$$S_d = \sum_{k=1}^{|m|} \overline{S}_{ampdu,k}.$$

The data transmission time for k can be calculated as follows:

$$T_{x,k} = T_{preamble} + S_{ampdu,k}/r_k$$

where T preamble is the PLCP preamble transmission time, and $\overline{S}_{ampdu,k}/r_k$ is the frame transmission time. The total time may be estimated as $T_x = \max_{k \in m}\{T_{x,k}\}$ · The protocol overhead ($T_o$) may include the MU-MIMO sounding and ACK overheads.

In some implementations, a client k can form multiple different MU-MIMO groups with clients already associated with APs in its range. These groups may change in time, depending on clients' channel correlation characteristics, bandwidth and traffic profiles. Such dynamics may make the identification of the best-throughput AP for k to be a challenging task. In some implementations, MAPS can provide a new effective throughput metric that accounts for such dynamics. For example, it may favor APs that a) allow for high-throughput MU-MIMO groups, and b) offer many different grouping opportunities.

For each AP X in client k's range, MAPS can compute all possible MU-MIMO groups at X. Note that, in this implementation, only MU-MIMO-capable and active clients (i.e., $S_{ampdu}$ > 0) may be considered as candidates for grouping. Moreover, only clients with the same bandwidths can be grouped together. If C is the set of candidate clients for grouping at an AP, then the number of MU-MIMO groups is up to $2^{|C|}$ - 1. MAPS may sort groups based on their throughput, and selects the |M| highest throughput groups (which are likely to be formed in practice). In our implementation, |M| can be set to $min\{6, 2^{|C|} - 1\}$. MAPS' effective throughput metric at an AP X, may be calculated as the aggregated throughput of the best MU-MIMO groups:

$$Thr^X = \frac{1}{|M|} \cdot \sum_{m \in M} Thr_m^X$$

From the above metric, APs with a larger number of high-throughput MU-MIMO groups will give higher effective throughput. Assuming that a set N includes all the AP's in client kos' range, then MAPS' effective network throughput may be defined as the aggregated throughput across APs in N: $Thr = \sum_{XinN} Thr^X$. MAPS can assign a client k to the AP that maximizes the effective network throughput Thr. It is appreciated that MAPS client assignment may not always be optimal. However, by increasing MU-MIMO gains, MAPS may provide a significant improvement over existing Wi-Fi networks.

An important design question for MAPS is when to trigger client assignment. In some implementations, timers and/or events can be used to trigger MAPS. First, MAPS may maintain a timer for each client, and may triggers AP selection upon its expiration. The timer may be set in the order of tens of seconds as association may require approximately 1.5 seconds. MAPS may freeze the timer for idle or very low traffic clients (i.e., $S_{ampdu} \approx 0$) so as to avoid frequent handoffs. It may also defer handoff when delay sensitive traffic (e.g., VoIP) is in progress.

Client assignment may also be triggered upon a client's mobility. For example, in some implementations, MAPS may leverage RSSI-PHY rate mappings from 802.11ac rate tables and may trigger client assignment when the measured RSSI corresponds to low MCS. Low RSSI may imply that a client moves way from its associated AP. IN some implementations, MAPS can use the Wi-Fi localization solutions already deployed in Wi-Fi networks to identify a client's mobility, and to trigger client assignment.

In some implementations, MAPS may be configured to attempt to balance traffic load among APs. To this end, it may consider as candidate APs for client assignment, only ones that are not overloaded. Busy air time (or load) calculation includes the impact of traffic/interference near an AP, and the traffic (downlink and uplink) accommodated by the AP. An overloaded AP may have a busy air time greater than or equal to a threshold (e.g., 80%). Busy airtime estimation may be available in 802.11 commodity drivers and may be used for automatic channel selection. MAPS' load balancer may prevent client assignment to APs that have reached their maximum supported client number. In some implementations, MAPS may seek to optimize the assignment of 802.11ac, MU-MIMO-capable clients to APs. Legacy 802.11a/b/g/n clients may be assigned to APs based on legacy (RSSI-based) algorithms. However, MAPS' load balancer may still consider the load offered by legacy clients connected to an AP when it assigns 802.11ac clients to the AP.

In some implementations, MAPS may assigns clients with orthogonal channels to APs in order to minimize inter-client interference in MU-MIMO groups. For a specific client assignment, APs and clients in interfering cells may coordinately cancel the inter-cell interference using their antennas for beamforming. Proposed implementations may work in concert with such solutions to further improve network performance. In some implementations, MAPS may not rely on any modifications on the client side and may be implemented in any 802.11ac-compliant commodity AP.

Although the flowchart of FIG. 3 and other example implementations described herein, such as the example implementation provided above, may suggest a specific order of performance, it is appreciated that this order may be rearranged into another suitable order, may be executed concurrently or with partial concurrence, or a combination thereof. Likewise, suitable additional and/or comparable steps may be added to method 116 or other methods described herein in order to achieve the same or comparable functionality. In some implementations, one or more steps are omitted. For example, in some implementations, block 118 of estimating a SINR value between a wireless client 110 an each AP 108 can be omitted from method 116 or performed by a different device. It is appreciated that blocks corresponding to additional or alternative functionality of other implementations described herein can be incorporated in method 116. For example, blocks corresponding to the functionality of various aspects of implementations otherwise described herein can be incorporated in method 116 even if such functionality is not explicitly characterized herein as a block in method 116.

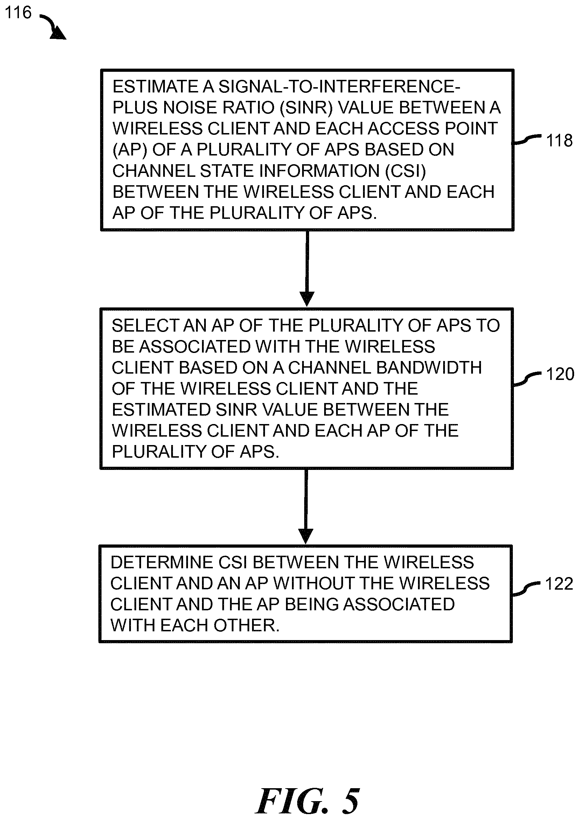

FIG. 5 illustrates another example of method 116 in accordance with the present disclosure. For illustration, FIG. 5 reproduces various blocks from method 116 of FIG. 3, however it is appreciated that method 116 of FIG. 5 can include additional, alternative, or fewer steps, functionality, etc., than method 116 of FIG. 3 and is not intended to be limited by the diagram of FIGs. 1, 2, and 4 (or vice versa) or the related disclosure thereof. It is further appreciated that method 116 of FIG. 3 can incorporate one or more aspects of method 116 of FIG. 5 and vice versa. For example, in some implementations, method 116 of FIG. 3 can include the additional step described below with respect to method 116 of FIG. 5. Method 116 of FIG. 5 includes determining (at block 122) CSI between the wireless client and an AP without the wireless client and the AP being associated with each other, for example as described above by using a NULL frame and ACK data to calculate CSI.

FIG. 6 is a diagram of a computing device 124 in accordance with the present disclosure. Computing device 124 can, for example, be in the form of a wireless controller (e.g., wireless controller 104), an AP (e.g., AP 108), or another suitable computing device within network environment 100 or in communication with network environment 100 or equipment thereof. In some implementations, the computing device can be a wireless controller 104 integrated in AP 108. In some implementations, computing device 124 is a wireless controller device (e.g., wireless controller 104) that is separate from AP 108. As described in further detail below, computing device 124 includes a processing resource 126 and a memory resource 128 that stores machine-readable instructions 130 and 132. For illustration, the description of computing device 124 makes reference to various aspects of the diagrams of FIGs. 1, 2, and 4, as well as method 116 of FIGs. 3 and 5. However it is appreciated that computing device 124 can include additional, alternative, or fewer aspects, functionality, etc., than the implementations described elsewhere herein and is not intended to be limited by the related disclosure thereof.

Instructions 130 stored on memory resource 128 are, when executed by processing resource 126, to cause processing resource 126 to receive Channel State Information (CSI) data between Access Point (AP) within a set of APs and each wireless client within a set of wireless clients. Instructions 130 can incorporate one or more aspects of blocks of method 116 or another suitable aspect of other implementations described herein (and vice versa). For example, in some implementations, instructions 130 or another set of instructions can determine CSI data for a wireless client 110 based on information from an ACK frame sent by the wireless client 110.

Instructions 132 stored on memory resource 128 are, when executed by processing resource 126, to cause processing resource 126 to estimate a SINR value between each AP within the set of APs and each wireless client within the set of wireless clients. Instructions 132 can incorporate one or more aspects of blocks of method 116 or another suitable aspect of other implementations described herein (and vice versa). For example, in some implementations, instructions 132 calculate SINR using equation 1 provided above.

Instructions 134 stored on memory resource 128 are, when executed by processing resource 126, to cause processing resource 126 to select APs to be assigned to one or more wireless clients within the set of wireless clients based on the estimated SINR values. Instructions 134 can incorporate one or more aspects of blocks of method 116 or another suitable aspect of other implementations described herein (and vice versa). For example, in some implementations, instructions 134 are to cause processing resource 126 to select APs to be assigned to one or more wireless clients within the set of wireless clients based on both the estimated SINR values and channel bandwidth for the wireless clients.

Instructions 136 stored on memory resource 128 are, when executed by processing resource 126, to cause processing resource 126 to instruct each selected AP to assign with its respective one or more wireless clients. Instructions 136 can incorporate one or more aspects of blocks of method 116 or another suitable aspect of other implementations described herein (and vice versa). For example, as described above, in some implementations, instructions XX can include instructing AP 108 to send a probe response to wireless client 110 to initiate an authentication and association process.

Processing resource 126 of computing device 124 can, for example, be in the form of a central processing unit (CPU), a semiconductor-based microprocessor, a digital signal processor (DSP) such as a digital image processing unit, other hardware devices or processing elements suitable to retrieve and execute instructions stored in memory resource 128, or suitable combinations thereof. Processing resource 126 can, for example, include single or multiple cores on a chip, multiple cores across multiple chips, multiple cores across multiple devices, or suitable combinations thereof. Processing resource 126 can be functional to fetch, decode, and execute instructions as described herein. As an alternative or in addition to retrieving and executing instructions, processing resource 126 can, for example, include at least one integrated circuit (IC), other control logic, other electronic circuits, or suitable combination thereof that include a number of electronic components for performing the functionality of instructions stored on memory resource 128. The term "logic" can, in some implementations, be an alternative or additional processing resource to perform a particular action and/or function, etc., described herein, which includes hardware, e.g., various forms of transistor logic, application specific integrated circuits (ASICs), etc., as opposed to machine executable instructions, e.g., software firmware, etc., stored in memory and executable by a processor. Processing resource 126 can, for example, be implemented across multiple processing units and instructions may be implemented by different processing units in different areas of computing device 124.

Memory resource 128 of computing device 124 can, for example, be in the form of a non-transitory machine-readable storage medium, such as a suitable electronic, magnetic, optical, or other physical storage apparatus to contain or store information such as machine-readable instructions 130, 132, 134, and 136. Such instructions can be operative to perform one or more functions described herein, such as those described herein with respect to method 116 or other methods described herein. Memory resource 128 can, for example, be housed within the same housing as processing resource 126 for computing device 124, such as within a computing tower case for computing device 124 (in implementations where computing device 124 is housed within a computing tower case). In some implementations, memory resource 128 and processing resource 126 are housed in different housings. As used herein, the term "machine-readable storage medium" can, for example, include Random Access Memory (RAM), flash memory, a storage drive (e.g., a hard disk), any type of storage disc (e.g., a Compact Disc Read Only Memory (CD-ROM), any other type of compact disc, a DVD, etc.), and the like, or a combination thereof. In some implementations, memory resource 128 can correspond to a memory including a main memory, such as a Random Access Memory (RAM), where software may reside during runtime, and a secondary memory. The secondary memory can, for example, include a nonvolatile memory where a copy of machine-readable instructions are stored. It is appreciated that both machine-readable instructions as well as related data can be stored on memory mediums and that multiple mediums can be treated as a single medium for purposes of description.

Memory resource 128 can be in communication with processing resource 126 via a communication link 138. Each communication link 138 can be local or remote to a machine (e.g., a computing device) associated with processing resource 126. Examples of a local communication link 138 can include an electronic bus internal to a machine (e.g., a computing device) where memory resource 128 is one of volatile, non-volatile, fixed, and/or removable storage medium in communication with processing resource 126 via the electronic bus.

In some implementations, one or more aspects of computing device 124 (e.g., AP 108, wireless controller 104, or other devices of a wireless network) can be in the form of functional modules that can, for example, be operative to execute one or more processes of instructions 130, 132, 134, or 136 or other functions described herein relating to other implementations of the disclosure. As used herein, the term "module" refers to a combination of hardware (e.g., a processor such as an integrated circuit or other circuitry) and software (e.g., machine- or processor-executable instructions, commands, or code such as firmware, programming, or object code). A combination of hardware and software can include hardware only (i.e., a hardware element with no software elements), software hosted at hardware (e.g., software that is stored at a memory and executed or interpreted at a processor), or hardware and software hosted at hardware. It is further appreciated that the term "module" is additionally intended to refer to one or more modules or a combination of modules. Each module of computing device 124 can, for example, include one or more machine-readable storage mediums and one or more computer processors.

In view of the above, it is appreciated that the various instructions of computing device 124 described above can correspond to separate and/or combined functional modules. For example, instructions 132 can correspond to a "SINR estimation module" (e.g., module 112 of FIGs. XX and X) to estimate a SINR value between each AP within a set of APs and each wireless client within a set of wireless clients. It is further appreciated that a given module can be used for multiple functions. As but one example, in some implementations, a single module can be used to both estimate a SINR value (e.g., corresponding to the functionality of instructions 132) as well as to select APs to be assigned to wireless clients (e.g., corresponding to the functionality of instructions 134).

One or more nodes within the network environment 100 (e.g., wireless controller 104, AP 108, etc.) can further include a suitable communication module to allow networked communication between network equipment. Such a communication module can, for example, include a network interface controller having an Ethernet port and/or a Fibre Channel port. In some implementations, such a communication module can include wired or wireless communication interface, and can, in some implementations, provide for virtual network ports. In some implementations, such a communication module includes hardware in the form of a hard drive, related firmware, and other software for allowing the hard drive to operatively communicate with other hardware of wireless controller 104, AP 108, or other network equipment. The communication module can, for example, include machine-readable instructions for use with communication the communication module, such as firmware for implementing physical or virtual network ports.

FIG. 7 illustrates a machine-readable storage medium 140 including various instructions that can be executed by a computer processor or other processing resource. In some implementations, medium 140 can be housed within an AP, such as AP 108, a wireless controller, such as wireless controller 104, or on another computing device within network environment 100 or in local or remote wired or wireless data communication with network environment 100. For example, as described elsewhere herein, such instructions can be implemented on one or more APs 108 in a distributed access point environment.

For illustration, the description of machine-readable storage medium 140 provided herein makes reference to various aspects of computing device 124 (e.g., processing resource 126) and other implementations of the disclosure (e.g., method 116). Although one or more aspects of computing device 124 (as well as instructions such as instructions 132 and 134) can be applied to or otherwise incorporated with medium 140, it is appreciated that in some implementations, medium 140 may be stored or housed separately from such a system. For example, in some implementations, medium 140 can be in the form of Random Access Memory (RAM), flash memory, a storage drive (e.g., a hard disk), any type of storage disc (e.g., a Compact Disc Read Only Memory (CD-ROM), any other type of compact disc, a DVD, etc.), and the like, or a combination thereof.

Medium 140 includes machine-readable instructions 142 stored thereon to cause processing resource 126 to select an Access Point (AP) of a plurality of APs to be assigned to a wireless client based on a channel bandwidth of the wireless client and an estimated signal-to-interference-plus noise ratio (SINR) value between the wireless client and each AP of the plurality of APs. Instructions 142 can, for example, incorporate one or more aspects of block 134 of method 116 or another suitable aspect of other implementations described herein (and vice versa). For example, in some implementations, instructions 142 are to cause a computer processor to receive CSI data between each AP 108 within the plurality of APs and wireless client 110, process the received CSI data for each AP 108 so as to remove noise from the CSI data, and determine the estimated SINR value for each AP 108 of the plurality of APs based on the processed CSI data, as described for example elsewhere herein.

Medium 140 includes machine-readable instructions 144 stored thereon to cause processing resource 126 to send instructions to the selected AP to assign itself to the wireless client. Instructions 144 can, for example, incorporate one or more aspects of block 136 of method 116 or another suitable aspect of other implementations described herein (and vice versa). For example, in some implementations, instructions 144 can include instructing AP 108 to send a probe response to wireless client 110 to initiate an authentication and association process.

While certain implementations have been shown and described above, various changes in form and details may be made. For example, some features that have been described in relation to one implementation and/or process can be related to other implementations. In other words, processes, features, components, and/or properties described in relation to one implementation can be useful in other implementations. Furthermore, it should be appreciated that the systems and methods described herein can include various combinations and/or sub-combinations of the components and/or features of the different implementations described. Thus, features described with reference to one or more implementations can be combined with other implementations described herein.

As used herein, "logic" is an alternative or additional processing resource to perform a particular action and/or function, etc., described herein, which includes hardware, e.g., various forms of transistor logic, application specific integrated circuits (ASICs), etc., as opposed to machine executable instructions, e.g., software firmware, etc., stored in memory and executable by a processor. Further, as used herein, "a" or "a number of" something can refer to one or more such things. For example, "a number of widgets" can refer to one or more widgets. Also, as used herein, "a plurality of" something can refer to more than one of such things.

### Claims

1. A method in a network environment or in data communication with a network environment comprising:

    estimating a signal-to-interference-plus noise ratio (SINR) value between a wireless client (110) and each Access Point (AP) (108) of a plurality of APs (108) in a network supporting MU-MIMO based on Channel State Information (CSI) between the wireless client (110) and each AP (108) of the plurality of APs (108); and
    the method is **characterized in that** it further comprises:
    selecting an AP (108) of the plurality of APs (108) to be associated with the wireless client (110) based on a channel bandwidth of the wireless client (110) and the estimated SINR value between the wireless client (110) and each AP (108) of the plurality of APs (108) and based on reducing a number of wireless clients (110) with correlated channel bandwidths associated with an AP (108) of the plurality of APs (108) so as to reduce the interference between wireless clients (110) associated with an AP (108), wherein reducing a number of wireless clients comprises preventing clients with correlated channels from being assigned to the same AP.

2. The method of claim 1, wherein selecting an AP (108) to be associated with the wireless client (110) is based on which AP (108) can provide the highest throughput performance for the wireless client (110).

3. The method of claim 1, wherein selecting an AP (108) to be associated with the wireless client (110) is based on a number of wireless clients (110) currently associated with each AP (108) of the plurality of APs (108).

4. The method of claim 1, wherein selecting an AP (108) to be associated with the wireless client (110) is based on predicted traffic load of the wireless client (110).

5. The method of claim 1, wherein CSI is determined between the wireless client (110) and an AP (108) without the wireless client (110) and the AP (108) being associated with each other.

6. The method of claim 1, wherein selecting an AP (108) to be associated with the wireless client (110) is triggered by the expiration of a timer.

7. The method of claim 6, wherein the timer is paused for idle or low traffic clients so as to avoid frequent handoffs.

8. The method of claim 6, wherein the timer is temporarily paused for delay-sensitive traffic.

9. A non-transitory machine readable storage medium (140) having stored thereon machine readable instructions (142, 144) to cause a computer processor to:

   select an Access Point (AP) (108) of a plurality of APs (108) to be assigned to a wireless client (110) in a network supporting MU-MIMO based on a channel bandwidth of the wireless client (110) and an estimated signal-to-interference-plus noise ratio (SINR) value between the wireless client (110) and each AP (108) of the plurality of APs (108); and
   the medium (140) is **characterized in that** selecting an AP (108) to be associated with the wireless client (110) is based on reducing a number of wireless clients (110) with correlated channel bandwidths associated with an AP (108) of the plurality of APs (108) so as to reduce the interference between wireless clients (110) associated with an AP (108),
   wherein reducing a number of wireless clients comprises preventing clients with correlated channels from being assigned to the same AP and
   the medium further comprises instructions to:
   send instructions to the selected AP (108) to assign itself to the wireless client (110).

10. The medium (140) of claim 9, wherein the machine readable instructions are to cause a computer processor to:

    receive Channel State Information (CSI) data between each AP (108) within the plurality of APs (108) and the wireless client (110);
    process the received CSI data for each AP (108) so as to remove noise from the CSI data; and
    determine the estimated SINR value for each AP (108) of the plurality of APs (108) based on the processed CSI data.

11. The medium (140) of claim 9, wherein the machine readable instructions are to be implemented on an AP (108) in a distributed access point environment (100).

12. A wireless controller (104) comprising:

    a processing resource (126); and
    a memory resource (128) storing machine readable instructions to cause the processing resource (126) to:

    receive Channel State Information (CSI) data between an Access Point (AP) (108) within a set of APs (108) and each wireless client (110) within a set of wireless clients (110); and
    estimate a signal-to-interference-plus noise ratio (SINR) value between each AP (108) within the set of APs (108) and each wireless client (110) within the set of wireless clients (110) in a network supporting MU-MIMO;

    the wireless controller (104) being **characterized in that** the memory resource (128) further comprises instructions to:

    select APs (108) to be assigned to one or more wireless clients (110) within the set of wireless clients (110) based on a channel bandwidth of the wireless clients and the estimated SINR values and based on reducing a number of wireless clients (110) with correlated channel bandwidths associated with an AP (108) of the plurality of APs (108) so as to reduce the interference between wireless clients (110) associated with an AP (108);
    wherein reducing a number of wireless clients comprises preventing clients with correlated channels from being assigned to the same AP.
    and
    instruct each selected AP (108) to assign with its respective one or more wireless clients (110).

13. The wireless controller (104) of claim 12, wherein the machine readable instructions are to cause the processing resource (126) to:
    select APs (108) to be assigned to one or more wireless clients (110) within the set of wireless clients (110) based on both the estimated SINR values and channel bandwidth for the wireless clients (110).

**Patentansprüche**

1. Verfahren in einer Netzwerkumgebung oder bei der Datenkommunikation mit einer Netzwerkumgebung, das Folgendes umfasst:

   Schätzen eines Signal-Störung-plus-Rausch-Verhältnis(*signal-to-interference-plus* - SINR)-Wertes zwischen einem drahtlosen Client (110) und jedem Zugriffspunkt (*access point* - AP) (108) mehrerer APs (108) in einem Netzwerk, das MU-MIMO unterstützt, basierend auf Kanalzustandsinformationen (*Channel State Information* - CSI) zwischen dem drahtlosen Client (110) und jedem AP (108) der mehreren APs (108); und
   wobei das Verfahren **dadurch gekennzeichnet ist, dass** es ferner Folgendes umfasst:
   Auswählen eines AP (108) der mehreren APs (108), der dem drahtlosen Client (110) zugeordnet werden soll, basierend auf einer Kanalbandbreite des drahtlosen Clients (110) und dem geschätzten SINR-Wert zwischen dem drahtlosen Client (110) und jedem AP (108) der mehreren APs (108) und basierend auf einem Verringern einer Anzahl von drahtlosen Clients (110) mit korrelierten Kanalbandbreiten, die einem AP (108) der mehreren APs (108) zugeordnet sind, um die Störung zwischen drahtlosen Clients (110), die einem AP (108) zugeordnet sind, zu verringern, wobei das Verringern einer Anzahl von drahtlosen Clients ein Verhindern umfasst, dass Clients mit korrelierten Kanälen demselben AP zugewiesen werden.

2. Verfahren nach Anspruch 1, wobei das Auswählen eines AP (108), der dem drahtlosen Client (110) zugeordnet werden soll, darauf basiert, welcher AP (108) die höchste Durchsatzleistung für den drahtlosen Client (110) bereitstellen kann.

3. Verfahren nach Anspruch 1, wobei das Auswählen eines AP (108), der dem drahtlosen Client (110) zugeordnet werden soll, auf einer Anzahl von drahtlosen Clients (110) basiert, die gegenwärtig jedem AP (108) der mehreren APs (108) zugeordnet sind.

4. Verfahren nach Anspruch 1, wobei das Auswählen eines AP (108), der dem drahtlosen Client (110) zugeordnet werden soll, auf der vorhergesagten Datenverkehrslast des drahtlosen Clients (110) basiert.

5. Verfahren nach Anspruch 1, wobei CSI zwischen dem drahtlosen Client (110) und einem AP (108) bestimmt werden, ohne dass der drahtlose Client (110) und der AP (108) einander zugeordnet sind.

6. Verfahren nach Anspruch 1, wobei das Auswählen eines AP (108), der dem drahtlosen Client (110) zugeordnet werden soll, durch das Ablaufen eines Zeitgebers ausgelöst wird.

7. Verfahren nach Anspruch 6, wobei der Zeitgeber bei Clients im Leerlauf oder bei geringem Datenverkehr angehalten wird, um häufige Übergaben zu vermeiden.

8. Verfahren nach Anspruch 6, wobei der Zeitgeber für verzögerungsempfindlichen Datenverkehr vorübergehend angehalten wird.

9. Nicht flüchtiges maschinenlesbares Speichermedium (140), auf dem maschinenlesbare Anweisungen (142, 144) gespeichert sind, um einen Computerprozessor zu Folgendem zu veranlassen:

   Auswählen eines Zugriffspunktes (AP) (108) aus mehreren APs (108), der einem drahtlosen Client (110) in einem Netzwerk, das MU-MIMO unterstützt, zugeordnet werden soll, basierend auf einer Kanalbandbreite des drahtlosen Clients (110) und einem geschätzten Signal-Störung-plus-Rausch-Verhältnis(SINR)-Wert zwischen dem drahtlosen Client (110) und jedem AP (108) der mehreren APs (108); und
   das Medium (140) **dadurch gekennzeichnet ist, dass** das Auswählen eines AP (108), der dem drahtlosen Client (110) zugeordnet werden soll, auf dem Verringern einer Anzahl von drahtlosen Clients (110) mit korrelierten Kanalbandbreiten, die einem AP (108) der mehreren APs (108) zugeordnet sind, basiert, um die Störung zwischen drahtlosen Clients (110), die einem AP (108) zugeordnet sind, zu verringern, wobei das Verringern einer Anzahl von drahtlosen Clients das Verhindern umfasst, dass Clients mit korrelierten Kanälen demselben AP zugewiesen werden, und das Medium ferner Anweisungen für Folgendes umfasst:
   Senden von Anweisungen an den ausgewählten AP (108), sich dem drahtlosen Client (110) zuzuweisen.

10. Medium (140) nach Anspruch 9, wobei die maschinenlesbaren Anweisungen einen Computerprozessor zu Folgendem veranlassen sollen:

Empfangen von Kanalzustandsinformations(CSI)-Daten zwischen jedem AP (108) innerhalb der mehreren APs (108) und dem drahtlosen Client (110);

Verarbeiten der empfangenen CSI-Daten für jeden AP (108), um Rauschen aus den CSI-Daten zu entfernen; und

Bestimmen des geschätzten SINR-Wertes für jeden AP (108) aus den mehreren APs (108), basierend auf den verarbeiteten CSI-Daten.

11. Medium (140) nach Anspruch 9, wobei die maschinenlesbaren Anweisungen auf einem AP (108) in einer verteilten Zugriffspunktumgebung (100) implementiert werden sollen.

12. Drahtlose Steuervorrichtung (104), die Folgendes umfasst:

eine Verarbeitungsressource (126); und

eine Speicherressource (128), die maschinenlesbare Anweisungen speichert, um die Verarbeitungsressource (126) zu Folgendem zu veranlassen:

Empfangen von Kanalzustandsinformations(CSI)-Daten zwischen einem Zugriffspunkt (AP) (108) innerhalb eines Satzes von APs (108) und jedem drahtlosen Client (110) innerhalb eines Satzes von drahtlosen Clients (110); und

Schätzen eines Signal-Störung-plus-Rausch-Verhältnis(SINR)-Wertes zwischen jedem AP (108) innerhalb des Satzes von APs (108) und jedem drahtlosen Client (110) innerhalb des Satzes von drahtlosen Clients (110) in einem Netzwerk, das MU-MIMO unterstützt;

wobei die drahtlose Steuervorrichtung (104) **dadurch gekennzeichnet ist, dass** die Speicherressource (128) ferner Anweisungen für Folgendes umfasst:

Auswählen von APs (108), die einem oder mehreren drahtlosen Clients (110) innerhalb des Satzes von drahtlosen Clients (110) zugewiesen werden sollen, basierend auf einer Kanalbandbreite der drahtlosen Clients und den geschätzten SINR-Werten und basierend auf dem Verringern einer Anzahl von drahtlosen Clients (110) mit korrelierten Kanalbandbreiten, die einem AP (108) der mehreren APs (108) zugeordnet sind, um die Störung zwischen drahtlosen Clients (110), die einem AP (108) zugeordnet sind, zu verringern; wobei das Verringern einer Anzahl von drahtlosen Clients das Verhindern umfasst, dass Clients mit korrelierten Kanälen demselben AP zugewiesen werden, und Anweisen jedes ausgewählten AP (108), sich seinem jeweiligen einen oder mehreren drahtlosen Clients (110) zuzuweisen.

13. Drahtlose Steuervorrichtung (104) nach Anspruch 12, wobei die maschinenlesbaren Anweisungen die Verarbeitungsressource (126) zu Folgendem veranlassen sollen:

Auswählen von APs (108), die einem oder mehreren drahtlosen Clients (110) innerhalb des Satzes von drahtlosen Clients (110) zugewiesen werden sollen, basierend sowohl auf den geschätzten SINR-Werten als auch auf der Kanalbandbreite für die drahtlosen Clients (110).

**Revendications**

1. Procédé dans un environnement réseau ou en communication de données avec un environnement réseau comprenant :

l'estimation d'une valeur de rapport signal/brouillage plus bruit (SINR) entre un client sans fil (110) et chaque point d'accès (AP) (108) parmi une pluralité d'AP (108) dans un réseau prenant en charge MU-MIMO sur la base d'informations d'état de canal (CSI) entre le client sans fil (110) et chaque AP (108) parmi la pluralité d'AP (108) ; et

le procédé étant **caractérisé en ce qu'**il comprend en outre :

la sélection d'un AP (108) parmi la pluralité d'AP (108) à associer au client sans fil (110) sur la base d'une largeur de bande de canal du client sans fil (110) et de la valeur SINR estimée entre le client sans fil (110) et chaque AP (108) parmi la pluralité d'AP (108) et sur la base de la réduction d'un nombre de clients sans fil (110) ayant des largeurs de bande de canal corrélées associés à un AP (108) parmi la pluralité d'AP (108) de manière à réduire le brouillage entre des clients sans fil (110) associés à un AP (108), la réduction d'un nombre de clients sans fil comprenant l'empêchement de l'attribution de clients ayant des canaux corrélés au même AP.

**2.** Procédé selon la revendication 1, dans lequel la sélection d'un AP (108) à associer au client sans fil (110) est basée sur le fait de savoir quel AP (108) peut fournir les performances de débit les plus élevées pour le client sans fil (110).

**3.** Procédé selon la revendication 1, dans lequel la sélection d'un AP (108) à associer au client sans fil (110) est basée sur un nombre de clients sans fil (110) actuellement associés à chaque AP (108) parmi la pluralité d'AP (108).

**4.** Procédé selon la revendication 1, dans lequel la sélection d'un AP (108) à associer au client sans fil (110) est basée sur la charge de trafic prédite du client sans fil (110).

**5.** Procédé selon la revendication 1, dans lequel les CSI sont déterminées entre le client sans fil (110) et un AP (108) sans que le client sans fil (110) et l'AP (108) ne soient associés l'un à l'autre.

**6.** Procédé selon la revendication 1, dans lequel la sélection d'un AP (108) à associer au client sans fil (110) est déclenchée par l'expiration d'un temporisateur.

**7.** Procédé selon la revendication 6, dans lequel le temporisateur est suspendu pour les clients inactifs ou à faible trafic de manière à éviter les transferts fréquents.

**8.** Procédé selon la revendication 6, dans lequel le temporisateur est temporairement suspendu pour du trafic sensible au retard.

**9.** Support de stockage lisible par machine non transitoire (140) sur lequel sont stockées des instructions lisibles par machine (142, 144) pour amener un processeur d'ordinateur à :

sélectionner un point d'accès (AP) (108) parmi une pluralité d'AP (108) à attribuer à un client sans fil (110) dans un réseau prenant en charge MU-MIMO sur la base d'une largeur de bande de canal du client sans fil (110) et d'une valeur de rapport signal/brouillage plus bruit (SINR) estimée entre le client sans fil (110) et chaque AP (108) parmi la pluralité d'AP (108) ; et
le support (140) étant **caractérisé en ce que** la sélection d'un AP (108) à associer au client sans fil (110) est basée sur la réduction d'un nombre de clients sans fil (110) ayant des largeurs de bande de canal corrélées associés à un AP (108) parmi la pluralité d'AP (108) de manière à réduire le brouillage entre des clients sans fil (110) associés à un AP (108), la réduction d'un nombre de clients sans fil comprenant l'empêchement de l'attribution de clients ayant des canaux corrélés au même AP et le support comprenant en outre des instructions pour :
envoyer des instructions à l'AP sélectionné (108) pour l'amener à s'auto-attribuer au client sans fil (110).

**10.** Support (140) selon la revendication 9, dans lequel les instructions lisibles par machine doivent amener un processeur d'ordinateur à :

recevoir des données d'informations d'état de canal (CSI) entre chaque AP (108) au sein de la pluralité d'AP (108) et le client sans fil (110) ;
traiter les données CSI reçues pour chaque AP (108) de manière à éliminer le bruit des données CSI ; et
déterminer la valeur SINR estimée pour chaque AP (108) parmi la pluralité d'AP (108) sur la base des données CSI traitées.

**11.** Support (140) selon la revendication 9, dans lequel les instructions lisibles par machine doivent être mises en œuvre sur un AP (108) dans un environnement de point d'accès distribué (100).

**12.** Contrôleur sans fil (104) comprenant :

une ressource de traitement (126) ; et
une ressource de mémoire (128) stockant des instructions lisibles par machine pour amener la ressource de traitement (126) à :

recevoir des données d'informations d'état de canal (CSI) entre un point d'accès (AP) (108) au sein d'un ensemble d'AP (108) et chaque client sans fil (110) au sein d'un ensemble de clients sans fil (110) ; et
estimer une valeur de rapport signal/brouillage plus bruit (SINR) entre chaque AP (108) au sein de l'ensemble des AP (108) et chaque client sans fil (110) au sein de l'ensemble de clients sans fil (110) dans un réseau prenant en charge MU-MIMO ;

le contrôleur sans fil (104) étant **caractérisé en ce que** la ressource de mémoire (128) comprend en outre des instructions pour :

sélectionner des AP (108) à attribuer à un ou plusieurs clients sans fil (110) au sein de l'ensemble de clients sans fil (110) sur la base de la largeur de bande de canal des clients sans fil et des valeurs SINR estimées et sur la base de la réduction d'un nombre de clients sans fil (110) ayant des largeurs de bande de canal corrélées associés à un AP (108) parmi la pluralité d'AP (108) de manière à réduire le brouillage entre des clients sans fil (110) associés à un AP (108) ;

la réduction d'un nombre de clients sans fil comprenant l'empêchement de l'attribution de clients ayant des canaux corrélés au même AP ; et donner une instruction à chaque AP (108) sélectionné à attribuer quant à son ou ses clients sans fil respectifs (110).

13. Contrôleur sans fil (104) selon la revendication 12, dans lequel les instructions lisibles par machine doivent amener la ressource de traitement (126) à :

sélectionner des AP (108) à attribuer à un ou plusieurs clients sans fil (110) au sein de l'ensemble de clients sans fil (110) à la fois sur la base des valeurs SINR estimées et de la largeur de bande de canal pour les clients sans fil (110).

**FIG. 1**

FIG. 2

116

ESTIMATE A SIGNAL-TO-INTERFERENCE-
PLUS NOISE RATIO (SINR) VALUE BETWEEN A
WIRELESS CLIENT AND EACH ACCESS POINT
(AP) OF A PLURALITY OF APS BASED ON
CHANNEL STATE INFORMATION (CSI)
BETWEEN THE WIRELESS CLIENT AND EACH
AP OF THE PLURALITY OF APS.

118

SELECT AN AP OF THE PLURALITY OF APS TO
BE ASSOCIATED WITH THE WIRELESS
CLIENT BASED ON A CHANNEL BANDWIDTH
OF THE WIRELESS CLIENT AND THE
ESTIMATED SINR VALUE BETWEEN THE
WIRELESS CLIENT AND EACH AP OF THE
PLURALITY OF APS.

120

*FIG. 3*

**FIG. 4**

116

ESTIMATE A SIGNAL-TO-INTERFERENCE-
PLUS NOISE RATIO (SINR) VALUE BETWEEN A
WIRELESS CLIENT AND EACH ACCESS POINT
(AP) OF A PLURALITY OF APS BASED ON
CHANNEL STATE INFORMATION (CSI)
BETWEEN THE WIRELESS CLIENT AND EACH
AP OF THE PLURALITY OF APS.

118

SELECT AN AP OF THE PLURALITY OF APS TO
BE ASSOCIATED WITH THE WIRELESS
CLIENT BASED ON A CHANNEL BANDWIDTH
OF THE WIRELESS CLIENT AND THE
ESTIMATED SINR VALUE BETWEEN THE
WIRELESS CLIENT AND EACH AP OF THE
PLURALITY OF APS.

120

DETERMINE CSI BETWEEN THE WIRELESS
CLIENT AND AN AP WITHOUT THE WIRELESS
CLIENT AND THE AP BEING ASSOCIATED
WITH EACH OTHER.

122

*FIG. 5*

124

126
PROCESSING RESOURCE

138

128
MEMORY RESOURCE

130
INSTRUCTIONS TO RECEIVE CHANNEL STATE INFORMATION (CSI) DATA BETWEEN ACCESS POINT (AP) WITHIN A SET OF APS AND EACH WIRELESS CLIENT WITHIN A SET OF WIRELESS CLIENTS.

132
INSTRUCTIONS TO ESTIMATE A SIGNAL-TO-INTERFERENCE-PLUS NOISE RATIO (SINR) VALUE BETWEEN EACH AP WITHIN THE SET OF APS AND EACH WIRELESS CLIENT WITHIN THE SET OF WIRELESS CLIENTS.

134
INSTRUCTIONS TO SELECT APS TO BE ASSIGNED TO ONE OR MORE WIRELESS CLIENTS WITHIN THE SET OF WIRELESS CLIENTS BASED ON THE ESTIMATED SINR VALUES.

136
INSTRUCTIONS TO INSTRUCT EACH SELECTED AP TO ASSIGN WITH ITS RESPECTIVE ONE OR MORE WIRELESS CLIENTS.

*FIG. 6*

MACHINE READABLE STORAGE MEDIUM — 140

INSTRUCTIONS TO SELECT AN ACCESS POINT (AP) OF A PLURALITY OF APS TO BE ASSIGNED TO A WIRELESS CLIENT BASED ON A CHANNEL BANDWIDTH OF THE WIRELESS CLIENT AND AN ESTIMATED SIGNAL-TO-INTERFERENCE-PLUS NOISE RATIO (SINR) VALUE BETWEEN THE WIRELESS CLIENT AND EACH AP OF THE PLURALITY OF APS. — 142

INSTRUCTIONS TO SEND INSTRUCTIONS TO THE SELECTED AP TO ASSIGN ITSELF TO THE WIRELESS CLIENT. — 144

## FIG. 7

## REFERENCES CITED IN THE DESCRIPTION

**Patent documents cited in the description**

- US 2015223160 A1
- US 20130279362 A1

- US 20100111020 A1

**Non-patent literature cited in the description**

- **SANJIB SUR et al.** *Practical MU-MIMO user selection on 802.11ac commodity networks,* ISBN 978-1-4503-4226